# EUROPÄISCHE PATENTSCHRIFT

(11) **EP 3 281 019 B1**
(45) Veröffentlichungstag und Bekanntmachung des Hinweises auf die Patenterteilung: **12.06.2019**
(21) Anmeldenummer: 16716197.5
(22) Anmeldetag: 11.04.2016
(51) Int. Cl.: G01P 1/02, F16B 21/07

(54) **KLEMMHÜLSE UND EIN VERFAHREN ZUR HERSTELLUNG EINER KLEMMHÜLSE**
CLAMPING SLEEVE AND A METHOD FOR PRODUCING A CLAMPING SLEEVE
MANCHON DE SERRAGE ET PROCÉDÉ DE FABRICATION D'UNE MANCHON DE SERRAGE

(30) Priorität: 10.04.2015 DE 102015105550
(43) Veröffentlichungstag der Anmeldung: 14.02.2018
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); HUBER, Christoph, 80333 München (DE); EBERHARD, Werner, 86830 Schwabmünchen (DE); STAMMEL, Georg, 86853 Langerringen (DE)
(86) Internationale Anmeldenummer: PCT/EP2016/057869
(87) Internationale Veröffentlichungsnummer: WO 2016/162551

(56) Entgegenhaltungen:
- DE-A1- 3 229 207
- DE-A1-102007 056 340
- DE-A1-102012 024 762
- DE-U1- 8 815 130

## Beschreibung

Die vorliegende Erfindung bezieht sich auf eine Klemmhülse und ein Verfahren zur Herstellung einer Klemmhülse.

### Hintergrund

Klemmhülsen werden eingesetzt, um beispielsweise Sensoren in einer (Aufnahme-) Bohrung zu befestigen. Solche Sensoren können beispielsweise Drehzahlsensoren sein, die eine Drehzahl eines Rades, welches sich an der Bohrung entlang bewegt, messen. Um diese Sensoren fest innerhalb der Bohrung zu fixieren, kommen Klemmhülsen zum Einsatz, die zwischen dem Sensor und der Bohrung angeordnet sind und Federlaschen aufweisen, die den Sensor innerhalb der Bohrung abstützen bzw. diesen unter Druck in der Bohrung halten.

Solche Klemmhülsen sollen leicht einsetzbar sein, über einen längeren Zeitraum starken Vibrationen ohne Ermüdungserscheinungen widerstehen (d. h. eine hohe Dynamik aufweisen) und außerdem als Massenprodukt mit wenig Aufwand herstellbar sein.

Bei konventionellen Klemmhülsen kommen insbesondere Buntmetalllegierungen zum Einsatz, die diese Anforderungen bisher nur unzureichend erfüllen. Beispielsweise wird Kupferberyllium (CuBe) als Material genutzt, welches nur ein geringes Elastizitätsmodul aufweist und daher mit einer relativ großen Materialdicke ausgebildet sein muss, um den Vibrationen dauerhaft widerstehen zu können. Außerdem ist dieses Material relativ teuer und aufwendig in der Herstellung, so dass ein Bedarf nach Alternativen besteht.

DE 32 29 207 A1 offenbart eine Klemmbuchse für einen Stabsensor mit federnden Zungen, die sich im Mittelteil verbreitern.

Der vorliegenden Erfindung liegt die Aufgabe zugrunde, eine Klemmhülse zu schaffen, die die Nachteile der konventionellen Klemmhülsen überwindet und insbesondere als Massenprodukt mit wenig Aufwand herstellbar ist.

### Zusammenfassung

Die oben genannte Aufgabe wird durch eine Klemmhülse nach Anspruch 1 und ein Verfahren zur Herstellung derselben nach Anspruch 15 gelöst.

Die vorliegende Erfindung bezieht sich auf eine Klemmhülse, die in eine Bohrung einsetzbar ist und die zur Aufnahme und zur verschiebbaren Lagerung (Fixierung) eines Sensors in der Bohrung geeignet ist, wobei die Bohrung eine radiale und eine axiale Richtung definiert. Die Klemmhülse umfasst: einen Hülsenkörper zur Aufnahme des Sensors und zumindest eine Federzunge mit einem freien Ende und einem Befestigungsende, wobei sie mit dem Befestigungsende an dem Hülsenkörper befestigt ist und das freie Ende gegen eine Federkraft schwingbar ist. Somit kann die Federzunge den Sensor gegen die Bohrung unter Ausübung der Federkraft abstützen, wenn die Klemmhülse sich zusammen mit dem Sensor zumindest teilweise in der Bohrung befinden. Die Klemmhülse ist aus gewalztem Stahl derart gebildet, dass eine Walzrichtung des gewalzten Stahls zwischen dem Befestigungsende und dem freien Ende verläuft.

Der Hülsenkörper kann zumindest teilweise eine Zylinderform aufweisen und sich zumindest teilweise zwischen dem Sensor und der Bohrung in der axialen Richtung erstrecken, wenn die Klemmhülse sich zusammen mit dem Sensor in der Bohrung befindet. Die Klemmhülse definiert somit eine axiale Richtung (in Einführrichtung) und eine radiale Richtung senkrecht dazu.

Bei weiteren Ausführungsbeispielen kann eine Vielzahl von Federzungen entlang des Hülsenkörpers ausgebildet sein, so dass ein eingeführter Sensor von mehreren Seiten in der Bohrung durch eine Spannung zwischen dem Sensor und der Bohrung abgestützt wird. Die Walzrichtung des gewalzten Stahls kann beispielsweise in Einführrichtung der Klemmhülse in die Bohrung ausgerichtet sein (oder entgegengesetzt dazu). Die Federzungen können zwischen dem freien Ende und dem Befestigungsende gebogen sein, um so die Federkraft bereitzustellen, die zwischen der Bohrung und dem Sensor wirkt.

Bei weiteren Ausführungsbeispielen kann die Bohrung eine Bohrungsoberfläche aufweisen. Optional kann die Federzunge einen Stanzgrad aufweisen, der sich nach dem Einführen des Hülsenkörpers in die Bohrung von der Bohrungsoberfläche radial nach innen erstreckt. Der Hülsenkörper kann optional einen Stanzgrad aufweisen, der sich radial nach innen oder radial nach außen erstrecken kann (d.h. in die gleiche Richtung zeigen kann wie der Stanzgrad der Federzunge oder entgegengesetzt dazu).

Als Stanzgrad wird ein Grad verstanden, der sich herausbildet, wenn eine Stanzung vorgenommen wird und stellt (mikroskopische) Vorsprünge entlang der Stanzkante in Stanzrichtung dar. Entgegengesetzt zur Stanzrichtung wird die beispielhafte Federzunge oder der Hülsenkörper eine abgerundete Oberflächenstruktur aufweisen, so dass der Stanzgrad auf der einen Seite fühlbar ist, während auf der anderen Seite eine glatte oder leicht abgerundete Oberfläche entstanden ist.

Das freie Ende kann optional abgerundet sein, wobei das abgerundet ausgebildete freie Ende beispielsweise durch ein Abschleifen oder Formen derart gebildet werden kann, dass das freie Ende mit der Bohrung (nach dem Einsetzen der Klemmhülse) lediglich einen minimalen Kontakt hat. Dies führt dazu, dass ein Entlanggleiten des freien Endes entlang der Bohrung ohne Probleme möglich ist, da die Reibungskräfte zwischen dem freien Ende und der Bohrung minimiert werden. Beispielsweise kann das freie Ende als eine Kugelform oder durch entsprechende Prägungen als länglicher Höcker ausgebildet sein. Für die abgerundete Form gibt es insbesondere zwei Möglichkeiten. Zum einen kann eine Abrundung in einer Draufsicht auf die Federzunge ausgebildet werden. Zum anderen kann die Abrundung in einer Querschnittsansicht durch eine Längsrichtung der Federzunge entstehen.

Bei weiteren Ausführungsbeispielen kann das freie Ende der Federzunge eine Abprägung aufweisen, um beispielsweise einen punktförmigen Kontakt zu erreichen. Unter Abprägen ist eine nicht-elastische Druckdeformation zu verstehen, die ein Teil des Materials in eine Prägerichtung drückt. Durch das Abprägen wird erreicht, dass scharfe Kanten oder Ecken des freien Endes, sofern sie immer noch vorhanden sind, nicht mit der Bohrung in Kontakt geraten und somit nicht den Widerstand beim Einsetzen in die Bohrung erhöhen können. Das ist insbesondere dann vorteilhaft, wenn das freie Ende (entlang der Federzunge) von dem Sensor weg hin zu der Oberfläche der Bohrung gebogen ist, um so eine Federkraft zwischen der Bohrung und dem Sensor bereitzustellen. Hierbei kommt das freie Ende direkt mit der Bohrung in Kontakt, sodass eine möglichst geringe Reibung zwischen dem freien Ende und der Bohrung vorteilhaft ist.

Bei weiteren Ausführungsbeispielen kann sich das freie Ende vor dem Befestigungsende befinden (in einer Einführungsrichtung in die Bohrung). Bei weiteren Ausführungsbeispielen kann sich das freie Ende (bzgl. der Einführungsrichtung in die Bohrung), aber auch hinter dem Befestigungsende befinden.

Optional kann das freie Ende der Federzunge in ihrer Schwingungsrichtung (Arbeitsbereich der Feder) bündig mit dem Hülsenkörper abschließen, zumindest solange wie die Federzunge keine Federkraft ausübt (z.B. wenn der Sensor sich nicht in der Klemmhülse befindet). Dies bedeutet, dass das freie Ende der Federzunge nicht von dem Hülsenkörper radial nach außen hervorsteht. Somit kann das freie Ende beim Einführen der Klemmhülse in die Bohrung (sofern der Sensor noch nicht eingesetzt ist) lediglich zusammen mit der Oberfläche des Hülsenkörpers mit der Bohrung in Kontakt geraten. Bei einem bündigen Abschluss ist es nicht möglich, dass lediglich das freie Ende mit der Bohrung in Kontakt gerät, während der Hülsenkörper keinen Kontakt zur Oberfläche der Bohrung aufweist. Daher kann das freie Ende das Einführen der Klemmhülse nicht behindern.

Bei weiteren Ausführungsbeispielen kann das freie Ende der Federzunge in seine Schwingungsrichtung (Arbeitsbereich der Feder) relativ nach innen versetzt zu dem Hülsenkörper angeordnet sein, zumindest solange wie die Federzunge keine Federkraft ausübt. Somit hat auch in diesem Fall beim Einsetzen der Klemmhülse in die Bohrung das freie Ende keinen Kontakt mit der Bohrungsoberfläche, so dass auch keine Reibung zwischen dem freien Ende und der Bohrung entstehen kann. Es ist jedoch zu beachten, dass beim Einsetzen des Sensors in die Klemmhülse, die Federzunge nach außen gebogen werden kann. Beispielsweise geschieht dies, wenn die Federzunge radial leicht nach innen gebogen ist, so dass ein eingeführter Sensor die Federzunge herausdrücken würde und so das freie Ende gegen die Oberfläche der Bohrung drücken würde. Daher kann es vorteilhaft sein, wenn der Sensor erst nach dem Einsetzen der Klemmhülse in die Bohrung eingeführt wird.

Optional weist die Klemmhülse weiter zumindest einen Anschlag (oder eine Fixierungslasche) auf, der sich radial nach außen erstreckt. Der Anschlag dient der Fixierung der Klemmhülse in der Bohrung, sodass der Hülsenkörper nur so weit in die Bohrung einführbar ist, bis der Anschlag an eine Begrenzung der Bohrung anstößt und dadurch ein tieferes Einsetzen verhindert.

In weiteren Ausführungsbeispielen weist der Hülsenkörper optional einen Längsspalt in der axialen Richtung auf. Optional kann eine Anprägung ausgebildet sein, die radial nach innen gerichtet ist. Eine weitere Anprägung kann optional entlang einer Umfangsrichtung an einem in der Einschubrichtung vorderen Ende ausgebildet sein. Der Längsspalt ermöglicht es, die Klemmhülse radial zusammenzudrücken, um so ein Einsetzen der Klemmhülse zu erleichtern. Dies ist insbesondere dann vorteilhaft, wenn der Durchmesser der Klemmhülse derart gewählt ist, dass er passgenau zu der Bohrung ist und so einen festen Halt des Sensors innerhalb der Klemmhülse und der Bohrung gewährleistet. Es versteht sich, dass der Spalt sich über die gesamte axiale Ausdehnung der Klemmhülse erstrecken kann oder auch nur an einem Teil davon ausgebildet sein kann.

In weiteren Ausführungsbeispielen ist der Hülsenkörper radial gegenüberliegend von dem Längsspalt im Vergleich zu anderen Abschnitten verstärkt ausgebildet, um eine ovale Deformation des Hülsenkörpers zu unterdrücken, wenn der Hülsenkörper, vom Längsspalt aus gesehen, seitlich zusammengedrückt wird. Eine Deformation bezieht sich hier auf alle elastischen Verbiegungen, die eine Spannung in der Klemmhülse aufbauen und zu einer Formänderung der Klemmhülse führen. Somit ist auch das Zusammendrücken des Hülsenkörpers, um ihn in die Bohrung einzusetzen, eine Deformation, die erfindungsgemäß möglichst so geschehen soll, dass der Hülsenkörper zwar einen geringeren Radius aufweist, aber immer noch eine im Wesentlichen kreisförmige Gestalt beibehält. Ohne eine derartige Materialverstärkung oder inhomogene Materialverteilung entlang der Umfangsrichtung, würde ein Zusammendrücken der gegenüberliegenden Hülsenteile dazu führen, dass sich eine ovale Form entsteht. Dies würde ein Einsetzen der Klemmhülse in die Bohrung erschweren.

In weiteren Ausführungsbeispielen weisen die anderen Abschnitte optional Öffnungen auf, deren Größen so gewählt sind, dass beim Zusammendrücken die anderen Abschnitte stärker gebogen werden, um so die ovale Deformation zu verhindern.

Optional kann somit in dem verstärkten Abschnitt (im Vergleich zu den anderen Abschnitten) zusätzliches Material und/oder keine oder kleinere Öffnungen und/oder Verstärkungselemente ausgebildet sein.

Bei weiteren Ausführungsbeispielen umfasst das Material einen gewalzten Stahl der Sorte 1.6908 oder 1.4310. Diese Sorten beziehen sich auf die Stahlsorten, die in Europa nach Werkstoffnummern vom Stahlinstitut VDEh (Verein Deutscher Eisenhüttenleute) klassifiziert werden. Abgesehen von diesen speziellen Stahlsorten, können aber auch andere Sorten zum Einsatz kommen. Die Erfindung ist nicht auf spezielle Stahlsorten eingeschränkt.

Die vorliegende Erfindung bezieht sich ebenfalls auf ein Verfahren zur Herstellung einer Klemmhülse, die in eine Bohrung einführbar ist und die zur Aufnahme und zur Fixierung eines Sensors in der Bohrung geeignet ist, wobei die Bohrung eine radiale Richtung und eine axiale Richtung definiert. Das Verfahren umfasst die folgenden Schritte: Bereitstellen eines gewalzten Stahls mit einer Walzrichtung; Bilden zumindest einer Federzunge mit einem freien Ende und einem Befestigungsende durch Stanzen des gewalzten Stahls in eine Stanzrichtung, wobei die Walzrichtung des gewalzten Stahls zwischen dem Befestigungsende und dem freien Ende verläuft; und Formen eines Hülsenkörpers zur Aufnahme des Sensors, wobei das Befestigungsende an dem Hülsenkörper befestigt ist und das freie Ende gegen eine Federkraft schwingbar ist, sodass die Federzunge den Sensor gegen die Bohrung unter Ausübung der Federkraft abstützt, wenn die Klemmhülse sich zusammen mit dem Sensor zumindest teilweise in der Bohrung befinden.

In weiteren Ausführungsbeispielen ist die Stanzrichtung radial nach innen gewählt. Das Verfahren kann weiter ein Rollen des gewalzten Stahls umfassen, um einen zylinderförmigen Hülsenkörper mit einem Längsspalt zu bilden. Außerdem können optional alle zuvor beschriebenen Merkmale in dem Herstellungsverfahren entsprechend umgesetzt werden.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispielen, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine Klemmhülse gemäß einem Ausführungsbeispiel der vorliegenden Erfindung.
- Fig. 2a,b: veranschaulichen einen Stanzgrad an einem Teil des Hülsenkörpers oder der Federzunge.
- Fig. 3: zeigt eine Klemmhülse, die zusammen mit dem Sensor in der Bohrung eingesetzt ist.
- Fig. 4: zeigen weitere Ausführungsbeispiele für eine Klemmhülse.
- Fig. 5: zeigt ein weiteres Ausführungsbeispiel für eine Klemmhülse.
- Fig. 6: zeigt ein Ausführungsbeispiel für eine Klemmhülse mit Öffnungen.
- Fig. 7: zeigt ein weiteres Ausführungsbeispiel für eine Klemmhülse mit eingesetztem Sensor.
- Fig. 8: zeigen Ausführungsbeispiele für die Orientierung der Federzungen der Klemmhülse.

### Detaillierte Beschreibung

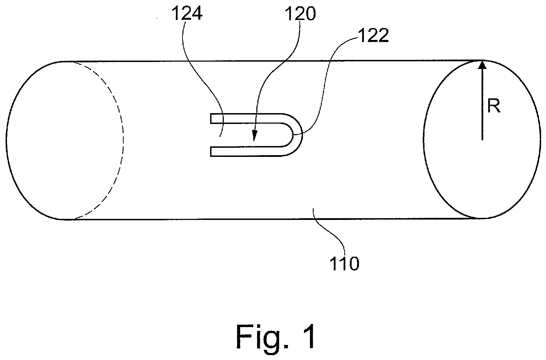

Fig. 1 zeigt eine Klemmhülse gemäß einem Ausführungsbeispiel der vorliegenden Erfindung. Die gezeigte Klemmhülse ist in eine Bohrung 102 einführbar und zur Aufnahme und zur Fixierung eines Sensors 105 in der Bohrung geeignet. Die Bohrung 102 definiert eine radiale und eine axiale Richtung. Die Klemmhülse umfasst: einen Hülsenkörper 110 zur Aufnahme des Sensors 105; und zumindest eine Federzunge 120 mit einem freien Ende 122 und einem Befestigungsende. Das Befestigungsende ist an dem Hülsenkörper 110 befestigt und das freie Ende ist gegen eine Federkraft schwingbar, sodass die Federzunge 120 den Sensor gegen die Bohrung 102 unter Ausübung der Federkraft abstützt, wenn die Klemmhülse sich zusammen mit dem Sensor zumindest teilweise in der Bohrung 102 befinden. Die Klemmhülse ist aus gewalztem Stahl derart gebildet, dass eine Walzrichtung des gewalzten Stahls zwischen dem Befestigungsende 124 und dem freien Ende 122 verläuft.

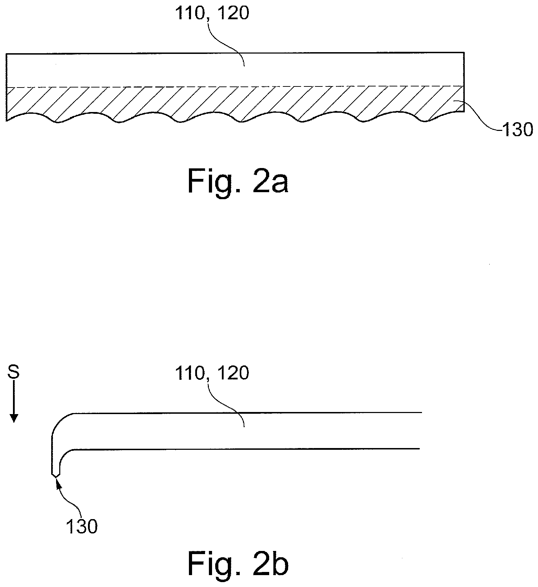

Die Fig. 2a und 2b veranschaulichen einen Stanzgrad, der beispielsweise an einem Teil des Hülsenkörpers 110 oder der Federzungen 120 ausgebildet sein kann und durch eine Stanzung in eine Stanzrichtung S entsteht. In der Fig. 2a ist zu sehen, dass unterhalb des Hülsenkörpers 110 oder der Federzungen 120 sich der Stanzgrad 130 erstreckt, der eine irreguläre Form hat und durch die Stanzung verursacht wird. In der Fig. 2b ist eine Querschnittsansicht zu sehen, die dem Stanzgrad 130 als ein Vorsprung in die Stanzrichtung S zeigt. Entgegengesetzt zur Stanzrichtung S ist dabei die Oberfläche des Hülsenkörpers 110 oder der Federzunge 120 abgerundet, während sie in Stanzrichtung S in Form eines scharfen Grades 130 spitz zuläuft.

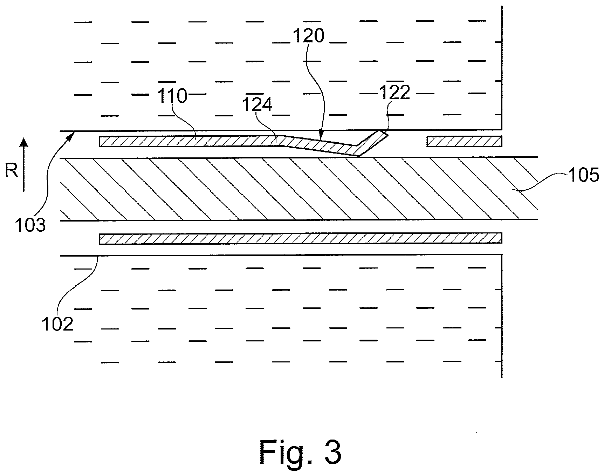

Fig. 3 zeigt ein Ausführungsbeispiel, bei welchem die Klemmhülse zusammen mit dem Sensor 105 in die Bohrung 102 eingesetzt ist, so dass sich der Hülsenkörper 110 zwischen dem Sensor 105 und der Bohrung 102 befindet. Gezeigt ist eine Querschnittsansicht durch die Federzunge 120 entlang der Einsetzrichtung der Klemmhülse in die Bohrung 102. In dem gezeigten Ausführungsbeispiel ist die Federzunge 120 gebogen. Beginnend mit dem festen Ende 124 (Befestigungsende), mit welchem sie an dem Hülsenkörper 110 befestigt ist, biegt sich die Federzunge 120 zunächst zum Sensor 105 hin, kontaktiert diesen und erstreckt sich anschließend hin zur Bohrung 102, deren Oberfläche 103 durch das freie Ende 122 kontaktiert wird. Daher stützt die Klemmhülse den Sensor 105 gegen die Bohrung 102 ab, wobei die Federkraft der Federzunge 120 eine ausreichende Druckkraft bereitstellt, um den Sensor 105 sicher in der Bohrung zu halten und verschiebbar zu lagern.

In dem gezeigten Ausführungsbeispiel ist das freie Ende 122 abgerundet dargestellt und weist keinen Stanzgrad auf. Bei weiteren Ausführungsbeispielen ist zwar ein Stanzgrad vorhanden, er zeigt aber von der Oberfläche der Bohrung 102 weg (d. h. entgegengesetzt zur radialen Richtung R), so dass die Oberfläche 103 der Bohrung 102 nur mit dem abgerundeten Teil der Federzunge 120 in Kontakt kommt. Beispielsweise kann die Abrundung durch ein Abprägen oder durch eine Formgestaltung erreicht werden, die eine glatte Oberfläche erzeugt und eine Kontaktfläche zur Oberfläche 103 der Bohrung 102 minimiert. Ein solcher Stanzgrad würde mit der Bohrung 102 nicht in Kontakt geraten und erhöht somit (beim Einsetzen des Hülsenkörpers 110 in die Bohrung 102) auch nicht die Reibung zwischen dem freien Ende 122 und der Bohrung 102.

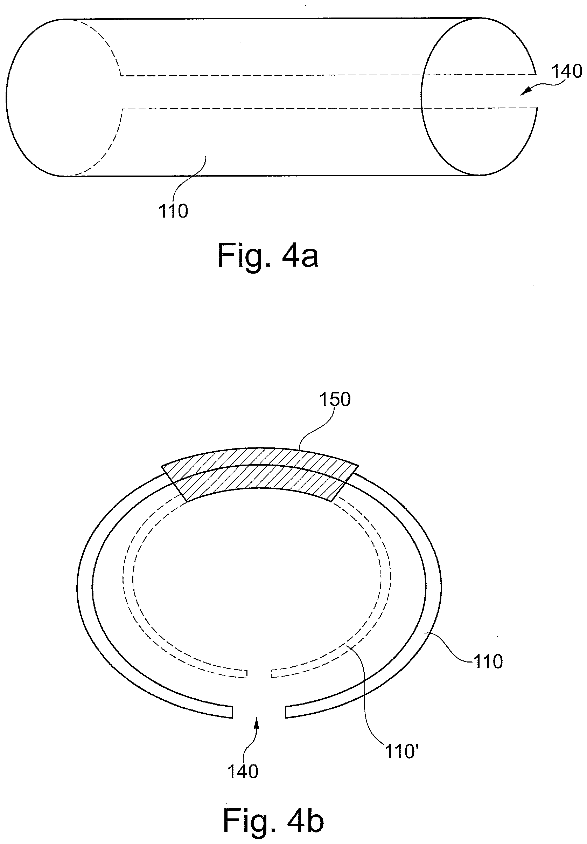

Die Fig. 4a und 4b zeigen eine Ausführungsform, bei denen der Hülsenkörper 110 einen Spalt 140 aufweist.

Fig. 4a zeigt eine Raumansicht der Klemmhülse, die sich in eine axiale Richtung erstreckt und im Wesentlichen kreisförmig senkrecht zur axialen Richtung ausgebildet ist. Der Spalt 140 erstreckt sich entlang der gesamten axialen Richtung und ermöglicht, dass der Hülsenkörper 110 entgegengesetzt zur radialen Richtung zusammengedrückt werden kann. Dabei verkleinert sich der Spalt 140 und das Einsetzen des Hülsenkörpers 110 in die Bohrung 102 wird erleichtert (siehe Fig. 3).

Fig. 4b zeigt eine Querschnittsansicht senkrecht zur axialen Richtung, wobei der Spalt 140 unten angeordnet ist. Gemäß Ausführungsbeispielen ist auf einer dem Spalt 140 gegenüberliegenden Seite ein Abschnitt 150 ausgebildet, der im Vergleich zu dem übrigen Hülsenkörper 110 eine erhöhte Festigkeit (geringere Elastizität) aufweist. Diese erhöhte Festigkeit dient dazu, dass bei einem Zusammendrücken des Hülsenkörpers 110 (von rechts und links in der Fig. 4b) ein deformierter Hülsenkörper 110' sich herausbildet, der ebenfalls im Wesentlichen kreisförmig ist, jedoch einen geringeren Radius und einen verringerten Spalt 140 aufweist. Da die Festigkeit entlang des Abschnittes 150 größer ist, als in dem übrigen Bereich des Hülsenkörpers 110, führt ein Zusammendrücken dazu, dass die anderen Teile des Hülsenkörpers 110 (außerhalb des Abschnitts 150) sich stärker deformieren, als der Abschnitt 150. Dies kann beispielsweise dadurch erreicht werden, dass entlang des Abschnittes 150 kaum Öffnungen ausgebildet sind, z. B. keine Federzungen 120 oder zusätzliche Rippen oder ähnliche Befestigungsstrukturen vorgesehen sind, die dem Hülsenkörper 110 eine erhöhte Festigkeit bieten. Ebenso ist es möglich, dass entlang des verbleibenden Hülsenkörpers 110 (d.h. außerhalb des Abschnitts 150) mehrere Öffnungen ausgebildet sind (in dieser Figur nicht zu sehen) oder Öffnungen eine größere axiale Ausdehnung aufweisen, was dazu führt, dass die verbleibenden Abschnitte stärker deformierbar sind als der Abschnitt 150.

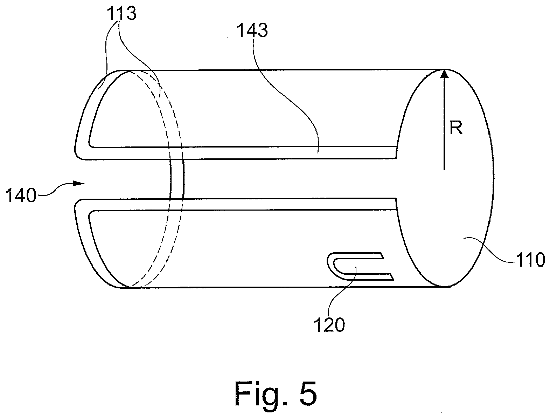

Fig. 5 zeigt eine Raumansicht von einem weiteren Ausführungsbeispiel der Klemmhülse mit einem Spalt 140 und eine Federzunge 120. In dem Ausführungsbeispiel der Fig. 5 ist entlang einer Umfangsrichtung des Hülsenkörpers 110 eine Abprägung 113 ausgebildet, die den Hülsenkörper 110 entgegen der radialen Richtung R nach innen abschrägt. Diese Abprägung 113 erleichtert ein Einsetzen der Klemmhülse in die Bohrung 102, da leichte Oberflächenunebenheiten der Bohrung 102 nicht dazu führen, dass die Klemmhülse beim Einführen hakt, sondern der abgeflachte Abschnitt 113 sich leicht darüber hinweg bewegen kann. Dies erleichtert die Montage des Hülsenkörpers 110 in der Bohrung 102. Ebenso ist in dem Ausführungsbeispiel der Fig. 5 eine weitere Abprägung 143 entlang des Spaltes 140 ausgebildet. Die weitere Abprägung 143 erleichtert ein Zusammendrücken der Klemmhülse, zum Beispiel über den Punkt hinaus, wenn der Spalt 140 vollständig verschwindet und eine teilweise Überlappung des Klemmhülsenkörpers 110 auf beiden Seitens des Spaltens 140 erfolgt.

Derartige Abprägungen können ebenfalls entlang der Federzunge 120 ausgebildet sein, um so eine Reibung zwischen der Klemmhülse und der Bohrung 102 oder zwischen dem Hülsenkörper 110 und dem Sensor 105 zu verringern.

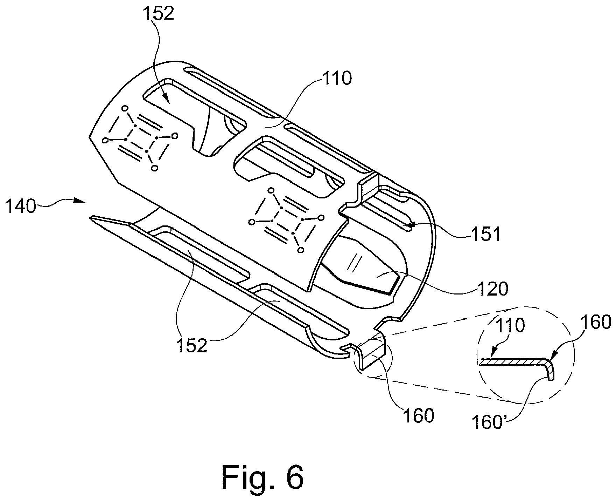

Fig. 6 zeigt eine Raumansicht einer Klemmhülse mit einer Vielzahl von Öffnungen 151, 152, die entlang einer Umfangsrichtung der Klemmhülse ausgebildet sind. Das Ausführungsbeispiel der Fig. 6 weist ebenfalls einen Spalt 140 auf und mehrere Federzungen 120 (wobei nur eine sichtbar ist). Die Öffnungen 151, 152 umfassen erste Öffnungen 151 und zweite Öffnungen 152, wobei die ersten Öffnungen 151 auf einem gegenüberliegenden Abschnitt des Spaltes 140 ausgebildet sind und eine geringere Abmessung aufweisen, als die zweiten Öffnungen 152, die bezüglich des Spaltes 140 seitlich angeordnet sind. Die zweiten Öffnungen 152 liegen beispielsweise in jenem Bereich, in welchem ein Zusammendrücken der Klemmhülse durch einen Nutzer erfolgt, wenn die Klemmhülse in die Bohrung 102 eingesetzt wird. Die größer ausgebildeten zweiten Öffnungen 152, insbesondere wenn der Hülsenkörper 110 dort in axialer Richtung dünner ausgebildet ist, führen dazu, dass dieser Abschnitt der Klemmhülse oder des Hülsenkörpers 110 sich leichter deformieren lässt, als jener Abschnitt, in dem die ersten Öffnungen 151 ausgebildet sind. Dies kann, wie gesagt, dadurch erreicht werden, dass die axiale Längsausdehnung der ersten Öffnungen 151 geringer ist, als die axiale Längsausdehnung der zweiten Öffnungen 152.

Weiterhin weist die Klemmhülse, wie sie in der Fig. 6 zu sehen ist, Anschläge 160 (oder Fixierungslaschen) auf, die dazu dienen, die Klemmhülse beim Einsetzen in die Bohrung 102 axial zu fixieren, so dass die Klemmhülse nur soweit in die Bohrung 102 einsetzbar ist, bis die Anschläge 160 ein weiteres Eindringen der Klemmhülse in die Bohrung 102 verhindern. Weitere Details der Anschläge 160 sind in der Vergrößerungsansicht (Fig. 6a) zu sehen. Insbesondere können die Anschläge 160 einen Stanzgrat aufweisen, der sich entweder an einem Innenrand 160' oder einem gegenüberliegenden Außenrand des Anschlages 160 befinden. Beispielsweise können die Anschläge 160 durch ein Biegen eines Abschnittes des Hülsenkörpers 110 hergestellt werden, sodass der Innenrand 160' bezüglich der Biegerichtung als Biegeinnenradius definiert werden kann.

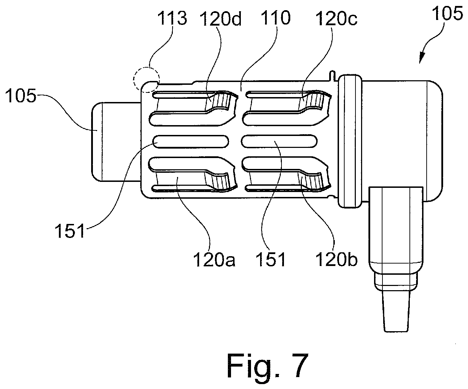

Die Fig. 7 zeigt ein Ausführungsbeispiel, bei welchem der Sensor 105 in die Klemmhülse eingesetzt ist. Bei dem in der Fig. 7 gezeigten Ausführungsbeispiel weist die Klemmhülse zumindest vier Federzungen 120a, 120b, 120c und 120d auf. Außerdem sind die ersten Öffnungen 151 zu sehen, die entlang der Umfangsrichtung der Klemmhülse zwischen zwei benachbarten Federzungen 120 ausgebildet sind. Ferner ist in dem Ausführungsbeispiel der Fig. 7 die Abprägung 113 sichtbar, die, wie in der Fig. 5 gezeigt, eine radial nach innen gerichtete Abschrägung des Hülsenkörpers 110 entlang einer Umfangsrichtung des axialen Randes (in Einschubrichtung) darstellt. Der Spalt 140 ist in der Fig. 7 nicht zu sehen. Er befindet sich auf der gegenüberliegenden Seite der Hülse.

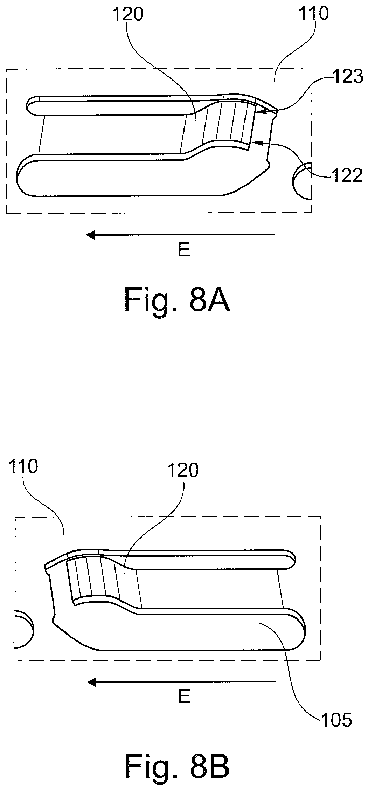

Die Fig. 8a und 8b zeigen zwei Ausführungsbeispiele mit unterschiedlich ausgerichteten Federzungen 120. In dem Ausführungsbeispiel der Fig. 8a ist die Federzunge 120 entgegengesetzt zu einer Einführrichtung E der Klemmhülse in die Bohrung 102 ausgebildet, während in dem Ausführungsbeispiel der Fig. 8b die Federzunge 120 sich in die Einführungsrichtung E der Klemmhülse in die Bohrung 102 erstreckt.

Außerdem sind bei den Ausführungsbeispielen, wie sie in den Fig. 8a und 8b zu sehen sind, das freie Ende 122 kantenförmig mit Ecken 123 ausgebildet. Gemäß den zuvor genannten Ausführungsbeispielen können die Ecken 123 ebenfalls abgerundet ausgebildet sein. Außerdem kann eine Stanzrichtung so gewählt sein, dass sie radial nach innen zeigt, um so eine Reibung zwischen den Kanten oder Ecken 123 des freien Endes 122 und der Bohrung 102 zu verringern.

Hierdurch wird ein verbesserter Einführkomfort möglich. Außerdem kann, wie zuvor beschrieben, das Problem eines möglichen Blockierens beim Einsetzen der Klemmhülse in die Bohrung 102 dadurch vermieden werden, dass das freie Ende 122 der Federzunge 120 bündig mit dem Hülsenkörper 110 oder leicht nach innen versetzt ausgebildet ist. Somit kommt das freie Ende 122 beim Einsetzen nicht in Kontakt mit der Oberfläche 103 der Bohrung 102. Vorteilhafterweise wird der Sensor 105 erst nach dem Einsetzen der Klemmhülse in die Bohrung 102 eingeführt.

Ein erhöhter Einführkomfort des Sensors 105 in den Hülsenkörper 110 wird in dem Ausführungsbeispiel der Fig. 8b erreicht, da die Federzunge 120 sich in die Einführungsrichtung des Sensors 105 in den Hülsenkörper 110 erstreckt und somit ein leichteres Hochbiegen der Federzunge 120 ermöglicht wird. Im Gegensatz zu konventionellen Klemmhülsen, bei denen die Federlaschen außen überstehen (sich radial weiter nach außen erstrecken als der Hülsenkörper 110), schließen die Federzungen 120 vorteilhafterweise bündig mit dem Hülsenkörper 110 ab und stehen nicht über den Außendurchmesser über.

Bei weiteren Ausführungsbeispielen wird das freie Ende 122, wie in der Fig. 1 oder 3 gezeigt, abgerundet, wobei ein Radius der Abrundung kleiner gewählt wird als der Radius der Bohrung 102. Dadurch wird erreicht, dass im günstigsten Fall nur ein Auflagepunkt in der Bohrung 102 entsteht, sodass der Abrieb beim Einführen des Sensors 105 minimiert wird, um so ein gleichmäßiges Einführen des Sensors zu ermöglichen. Insbesondere wird der sogenannte Stick-Slip-Effekt (plötzliches Überwinden einer Haftreibung) minimiert. Dies gilt auch für die Applikation mit dem Sensor 105.

Die Minimierung der Auflagefläche der Federzunge 120 verringert die Reibung zwischen der Bohrung 102 und der Federzunge 120 bei einer dynamischen Belastung.

Verschiedene Aspekte der Ausführungsbeispiele können auch wie folgt zusammengefasst werden.

Eine Verbesserung der Federlaschen (Federzungen 120) kann durch eine Änderung der Walzrichtung des gewalzten Stahles und/oder der Stanzrichtung beim Bilden der Klemmhülse erreicht werden. Insbesondere sind durch den Einsatz eines gewalzten Stahles (wie beispielsweise des Stahls mit der Kennung 1.4310 oder 1.6908) folgende Vorteile erzielbar:
(i) Weniger Material ist nötig, da dieses Material eine höhere Festigkeit aufweist und somit dünner ausgebildet werden kann als Vergleichsmaterialien von den konventionellen Klemmhülsen, wobei gleiche Federeigenschaften erreicht werden.
(ii) Die Klemmhülse wird durch Verwendung dieser Materialien leichter gegenüber den konventionellen Bundmetalllegierungen.
(iii) Eine höhere Dynamik wird erreicht, was bedeutet, dass die Hülse auch stärkere Vibrationen über lange Zeit unbeschadet übersteht. Insbesondere erfolgt keine Materialermüdung oder erst deutlich später als es bei konventionellen Materialien üblich ist.
(iv) Ein höherer Einführkomfort und eine bessere Montagefreundlichkeit wird erreicht, da die Einschiebekraft homogener ist. Insbesondere die Federlaschen 120 mit runden Kanten bewirken eine verringerte Reibung zwischen den Federzungen 120 und der Bohrung 102 und den verbesserten Einfuhrkomfort.

Diese Vorteile werden insbesondere dann erreicht, wenn die Stanzrichtung und die Walzrichtung des Materials so geändert werden, dass die Walzrichtung sich entlang der Federzunge erstreckt (um so die gewünschte hohe Dynamik zu erreichen) und die Stanzrichtung so gewählt wird, dass möglichst keine oder wenig Reibung erzeugt wird und sich eine für die Federeigenschaften der Federzunge 120 höhere Lebensdauer ergibt.

Weitere vorteilhafte Ausgestaltungen beziehen sich ebenfalls auf mögliche Stanzrichtungsänderungen, bei welchem die Stanzrichtung beispielsweise entlang der Umfangsrichtung des Hülsenkörpers 110 anders gewählt ist als entlang der Federzunge 120.

Weitere Ausführungsbeispiele bezogen sich ebenfalls auf ein Abprägen der Ecken 123 und Kanten der Federzunge 120. Die Prägung kann dabei auch nach oben erfolgen (d. h. hin zu der Bohrungsoberfläche 103), so dass eine Kugel oder eine Längsform als Auflagefläche der Federzunge 120 in der Bohrung 102 entsteht.

Weitere Ausführungsbeispiele bezogen sich ebenfalls auf ein Anprägen der Längskanten in Rollrichtung nach innen. Dadurch wird ein leichteres Einführen der Klemmhülse in die Bohrung 102 erreicht. Die Rollrichtung bezieht sich auf den Herstellungsprozess, bei der die Hülse zunächst als flaches Blech gebildet wird und anschließend in die Zylinderform gerollt wird. Bei weiteren Ausführungsbeispielen erfolgte ein Anprägen der in Einbaurichtung vorderen Kanten (d.h. der Stirn- und Längskanten).

Ebenso ist das Elastizitätsmodul deutlich größer als bei einer Buntmetalllegierung, wie beispielsweise Kupferberyllium, so dass die erfindungsgemäße Hülse dünner gebildet sein kann, als die konventionellen Hülsen. Durch die Nutzung des neuen Materials (gewalzter Stahl) kann die Hülse in einer Dicke von 0,1 bis 0,7 mm oder zwischen 0,3 und 0,5 mm oder kleiner als 0,6 mm gefertigt werden.

Ebenso ist das spezifische Gewicht von Stahl geringer, so dass die Klemmhülse gemäß Ausführungsbeispielen deutlich leichter wird als die konventionellen Klemmhülsen. Ebenso wird die Lebensdauer durch Verwendung des Materials 1.4310 deutlich erhöht, so dass es zu keiner Ermüdung der Klemmhülse kommt. Außerdem kann die Stanzrichtung bei den Fixierungslaschen gleich beibehalten werden.

Um das Entstehen einer ovalen Form beim Zusammendrücken zu verhindern, können Versteifungen der Hülsenkontur ausgebildet sein, um so eine optimierte runde Form beim Zusammendrücken zu erhalten. Beispielsweise können Stege und Löcher oder Sicken (als eine Versteifungsstruktur) gegenüber dem Längsspalt 140 ausgebildet sein. Somit wird beim seitlichen Zusammendrücken die auftretende Spannung auf den gesamten Umfang besser verteilt.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Liste von Bezugszeichen

- 102: Bohrung
- 103: Oberfläche der Bohrung
- 105: Sensor
- 110: Hülsenkörper
- 110': deformierter Hülsenkörper
- 113: Abprägung
- 120: Federzunge (a, b, c, ...)
- 122: freies Ende der Federzunge
- 123: Ecken
- 124: Befestigungsende der Federzunge
- 130: Stanzgrad
- 140: Längsspalt
- 143: weitere Abprägung
- 150: verstärkter Abschnitt
- 151: erste Öffnungen
- 152: zweite Öffnungen
- 160: Anschläge der Hülse
- 160': Innenrand
- E: Einführungsrichtung
- S: Stanzrichtung
- R: radiale Richtung

## Patentansprüche

1. Klemmhülse, die in eine Bohrung (102) einführbar ist und die zur Aufnahme und zur verschiebbaren Lagerung eines Sensors (105) in der Bohrung geeignet ist, wobei die Bohrung (102) eine radiale und eine axiale Richtung definiert, mit:
einem Hülsenkörper (110) zur Aufnahme des Sensors (105); und
zumindest einer Federzunge (120) mit einem freien Ende (122) und einem Befestigungsende (124), wobei das Befestigungsende (124) an dem Hülsenkörper (110) befestigt ist und das freie Ende gegen eine Federkraft schwingbar ist, sodass die Federzunge (120) den Sensor gegen die Bohrung (102) unter Ausübung der Federkraft abstützt und verschiebbar lagert, wenn die Klemmhülse sich zusammen mit dem Sensor zumindest teilweise in der Bohrung (102) befinden,
**dadurch gekennzeichnet, dass** die Klemmhülse aus gewalztem Stahl derart gebildet ist, dass eine Walzrichtung des gewalzten Stahls zwischen dem Befestigungsende (124) und dem freien Ende (122) verläuft.

2. Klemmhülse nach Anspruch 1, wobei die Bohrung (102) eine Bohrungsoberfläche (103) aufweist, und wobei die Federzunge (120) einen Stanzgrad (130) aufweist, der sich nach dem Einführen des Hülsenkörpers (110) in die Bohrung (102) von der Bohrungsoberfläche (103) radial nach innen erstreckt und der Hülsenkörper (110) einen Stanzgrad aufweist, der sich radial nach innen oder radial nach außen erstreckt.

3. Klemmhülse nach Anspruch 1 oder Anspruch 2, wobei das freie Ende (122) abgerundet ausgebildet ist, so dass eine Kontaktfläche der Federzunge (120) mit einer Bohrungsoberfläche (103) beim Einführen und der Applikation verringert ist.

4. Klemmhülse nach Anspruch 3, wobei das freie Ende (122) eine Abprägung aufweist, um eine Kontaktfläche zu minimieren.

5. Klemmhülse nach einem der vorhergehenden Ansprüche, wobei, in eine Einführungsrichtung in die Bohrung (102), das freie Ende (122) sich vor dem Befestigungsende befindet.

6. Klemmhülse nach Anspruch 5, wobei das freie Ende (122) der Federzunge (120) in ihrer Schwingungsrichtung bündig mit dem Hülsenkörper (110) abschließt, wenn die Federzunge (120) keine Federkraft ausübt.

7. Klemmhülse nach Anspruch 5, wobei das freie Ende (122) der Federzunge (120) in ihrer Schwingungsrichtung relativ nach innen versetzt zu dem Hülsenkörper (110) angeordnet ist, wenn die Federzunge (120) keine Federkraft ausübt.

8. Klemmhülse nach einem der Ansprüche 1 bis 4, wobei, in eine Einführungsrichtung in die Bohrung (102), das freie Ende (122) sich hinter dem Befestigungsende (124) befindet.

9. Klemmhülse nach einem der vorhergehenden Ansprüche, die weiter zumindest einen Anschlag (160) aufweist, der sich radial vom Hülsenkörper nach außen erstreckt, sodass der Hülsenkörper (110) nur bis zu diesem Anschlag (160) in die Bohrung einführbar ist, wobei sich der Stanzgrat an einem Innenrand (160') oder einem Außenrand des Anschlages (160) befindet.

10. Klemmhülse nach einem der vorhergehenden Ansprüche, wobei der Hülsenkörper (110) weiter einen Längsspalt (140) in der axialen Richtung und eine Anprägung, die radial nach innen gerichtet ist, aufweist, wobei die Anprägung sich entlang einer Umfangsrichtung an einem in der Einschubrichtung vorderen Ende erstreckt.

11. Klemmhülse nach Anspruch 10, wobei der Hülsenkörper (110) radial gegenüberliegend von dem Längsspalt (140) im Vergleich zu anderen Abschnitten verstärkt ausgebildet ist, um eine ovale Deformation des Hülsenkörpers (110) zu unterdrücken, wenn der Hülsenkörper (110) vom Längsspalt (140) aus gesehen seitlich zusammengedrückt wird.

12. Klemmhülse nach Anspruch 11, wobei die anderen Abschnitte Öffnungen (152) aufweisen, deren Größen so gewählt sind, dass das Zusammendrücken zu einer im Vergleich zu dem verstärkten Abschnitt (150) verstärkten Deformation führt, um so die ovale Deformation zu unterdrücken.

13. Klemmhülse nach Anspruch 10 oder 11, wobei, im Vergleich zu den anderen Abschnitten, in dem verstärkten Abschnitt (150): zusätzliches Material ausgebildet ist und/oder keine oder kleinere Öffnungen (151) ausgebildet sind und/oder Verstärkungselemente ausgebildet sind.

14. Klemmhülse nach einem der vorhergehenden Ansprüchen, wobei der Hülsenkörper (110) und/oder die Federzunge (120) ein Material mit einer Werkstoffnummer 1.4310 oder 1.6908 aufweist.

15. Verfahren zur Herstellung einer Klemmhülse, die in eine Bohrung (102) einführbar ist und die zur Aufnahme und zur Fixierung und Lagerung eines Sensors (105) in der Bohrung (102) geeignet ist, wobei die Bohrung (102) eine radiale Richtung und eine axiale Richtung definiert, mit folgenden Schritten
Bereitstellen eines gewalzten Stahls mit einer Walzrichtung;
**gekennzeichnet durch**:
Bilden zumindest einer Federzunge (120) mit einem freien Ende (122) und einem Befestigungsende (124) durch Stanzen des gewalzten Stahls in eine Stanzrichtung, wobei die Walzrichtung des gewalzten Stahls zwischen dem Befestigungsende (124) und dem freien Ende (122) verläuft; und
Formen eines Hülsenkörpers (110) zur Aufnahme des Sensors (105), wobei das Befestigungsende (124) an dem Hülsenkörper (110) befestigt ist und das freie Ende (122) gegen eine Federkraft schwingbar ist, sodass die Federzunge (120) den Sensor gegen die Bohrung (102) unter Ausübung der Federkraft abstützt und verschiebbar lagert, wenn die Klemmhülse sich zusammen mit dem Sensor zumindest teilweise in der Bohrung (102) befinden.

## Claims

1. Clamping sleeve which can be inserted into a bore (102) and which is suitable for receiving and for displaceably mounting a sensor (105) in the bore, wherein the bore (102) defines a radial and an axial direction, comprising:
a sleeve body (110) for receiving the sensor (105); and
at least one spring tongue (120) with a free end (122) and a fastening end (124), wherein the fastening end (124) is fastened to the sleeve body (110) and the free end can be swung against a spring force such that the spring tongue (120) supports and displaceably mounts the sensor against the bore (102) while exerting the spring force if the clamping sleeve is situated, together with the sensor, at least partially in the bore (102),
**characterized in that** the clamping sleeve is formed from rolled steel in such a way that a rolling direction of the rolled steel extends between the fastening end (124) and the free end (122).

2. Clamping sleeve according to Claim 1, wherein the bore (102) has a bore surface (103), and wherein the spring tongue (120) has a punching burr (130) which, after inserting the sleeve body (110) into the bore (102), extends radially inward from the bore surface (103), and the sleeve body (110) has a punching burr which extends radially inward or radially outward.

3. Clamping sleeve according to Claim 1 or Claim 2, wherein the free end (122) is designed to be rounded off such that a contact area of the spring tongue (120) with a bore surface (103) is reduced during insertion and application.

4. Clamping sleeve according to Claim 3, wherein the free end (122) has a stamped-down portion in order to minimize a contact area.

5. Clamping sleeve according to one of the preceding claims, wherein, in an insertion direction into the bore (102), the free end (122) is situated ahead of the fastening end.

6. Clamping sleeve according to Claim 5, wherein the free end (122) of the spring tongue (120), in its swinging direction, terminates flush with the sleeve body (110) if the spring tongue (120) exerts no spring force.

7. Clamping sleeve according to Claim 5, wherein the free end (122) of the spring tongue (120), in its swinging direction, is arranged so as to be offset relatively inward with respect to the sleeve body (110) if the spring tongue (120) exerts no spring force.

8. Clamping sleeve according to one of Claims 1 to 4, wherein, in an insertion direction into the bore (102), the free end (122) is situated behind the fastening end (124).

9. Clamping sleeve according to one of the preceding claims, which further has at least one stop (160) which extends radially outward from the sleeve body such that the sleeve body (110) can be inserted into the bore only up to this stop (160), wherein the punching burr is situated on an inner edge (160') or an outer edge of the stop (160).

10. Clamping sleeve according to one of the preceding claims, wherein the sleeve body (110) further has a longitudinal gap (140) in the axial direction and a stamped portion which is directed radially inward, wherein the stamped portion extends along a circumferential direction on a front end in the insertion direction.

11. Clamping sleeve according to Claim 10, wherein, radially oppositely from the longitudinal gap (140), the sleeve body (110) is designed to be reinforced by comparison with other portions in order to suppress an oval deformation of the sleeve body (110) if the sleeve body (110) is laterally compressed as seen from the longitudinal gap (140).

12. Clamping sleeve according to Claim 11, wherein the other portions have openings (152) whose sizes are chosen such that the compression leads to a deformation which is increased by comparison with the reinforced portion (150) in order thereby to suppress the oval deformation.

13. Clamping sleeve according to Claim 10 or 11, wherein, by contrast to the other portions, additional material is formed and/or no or smaller openings (151) are formed and/or reinforcing elements are formed in the reinforced portion (150).

14. Clamping sleeve according to one of the preceding claims, wherein the sleeve body (110) and/or the spring tongue (120) comprise or comprises a material with a material number 1.4310 or 1.6908.

15. Method for producing a clamping sleeve which can be inserted into a bore (102) and which is suitable for receiving and for fixing and mounting a sensor (105) in the bore (102), wherein the bore (102) defines a radial direction and an axial direction, comprising the following steps:
providing a rolled steel having a rolling direction;
**characterized by**:
forming at least one spring tongue (120) with a free end (122) and a fastening end (124) by punching the rolled steel in a punching direction, wherein the rolling direction of the rolled steel extends between the fastening end (124) and the free end (122); and
forming a sleeve body (110) for receiving the sensor (105), wherein the fastening end (124) is fastened to the sleeve body (110) and the free end (122) can be swung against a spring force such that the spring tongue (120) supports and displaceably mounts the sensor against the bore (102) while exerting the spring force if the clamping sleeve is situated, together with the sensor, at least partially in the bore (102).

## Revendications

1. Manchon de serrage, qui peut être introduit dans un trou (102) et qui convient à la réception et au montage coulissant d'un capteur (105) dans le trou, le trou (102) définissant une direction radiale et une direction axiale, comprenant :
un corps (110) de manchon de réception du capteur (105) et au moins une languette (120) formant ressort, ayant une extrémité (122) libre et une extrémité (124) de fixation, l'extrémité (124) de fixation étant fixée au corps (110) du manchon et l'extrémité libre peut osciller à l'encontre d'une force de ressort, de sorte que la languette (120) formant ressort appuie le capteur contre le trou (102), en appliquant la force de ressort et le monte coulissant, lorsque le manchon de serrage se trouve, ensemble avec le capteur, au moins en partie dans le trou (102),
**caractérisé en ce que** le manchon de serrage est en acier laminé, de sorte qu'une direction de laminage de l'acier laminé s'étende entre l'extrémité (124) de fixation et l'extrémité (122) libre.

2. Manchon de serrage suivant la revendication 1, dans lequel le trou (102) a une surface (103) et dans lequel la languette (120) formant ressort a une roue (130) d'estampage, qui, après l'introduction du corps (110) du manchon dans le trou (102), s'étend de la surface (103) du trou radialement vers l'intérieur et le corps (110) du manchon a une roue d'estampage, qui s'étend radialement vers l'intérieur ou radialement vers l'extérieur.

3. Manchon de serrage suivant la revendication 1 ou la revendication 2, dans lequel l'extrémité (122) libre est arrondie, de manière à diminuer, lors de l'introduction et de l'application, une surface de contact de la languette (120) formant ressort avec une surface (103) du trou.

4. Manchon de serrage suivant la revendication 3, dans lequel l'extrémité (122) libre a un estampage pour minimiser une surface de contact.

5. Manchon de serrage suivant l'une des revendications précédentes, dans lequel, dans un sens d'introduction dans le trou (102), l'extrémité (122) libre se trouve avant l'extrémité de fixation.

6. Manchon de serrage suivant la revendication 5, dans lequel l'extrémité (122) libre de la languette (120) formant ressort est, dans sa direction d'oscillation, à affleurement avec le corps (110) du manchon, lorsque la languette (120) formant ressort n'applique pas de force de ressort.

7. Manchon de serrage suivant la revendication 5, dans lequel l'extrémité (122) libre de la languette (120) formant ressort est décalée vers l'intérieur par rapport au corps (110) du manchon, lorsque la languette (120) formant ressort n'applique pas de force de ressort.

8. Manchon de serrage suivant l'une des revendications 1 à 4, dans lequel, dans le sens d'introduction dans le trou (102), l'extrémité (122) libre se trouve derrière l'extrémité (124) de fixation.

9. Manchon de serrage suivant l'une des revendications précédentes, qui a, en outre, au moins une butée (160), qui s'étend vers l'extérieur radialement du corps du manchon, de sorte que le corps (110) du manchon ne peut être introduit dans le trou que jusqu'à cette butée (160), la roue d'estampage se trouvant sur un bord (160') intérieur ou un bord extérieur de la butée (160).

10. Manchon de serrage suivant l'une des revendications précédentes, dans lequel le corps (110) du manchon a, en outre, une fente (140) longitudinale dans la direction axiale et un estampage, qui est dirigé vers l'intérieur radialement, l'estampage s'étendant, suivant une direction périphérique, sur une extrémité avant dans le sens d'introduction.

11. Manchon de serrage suivant la revendication 10, dans lequel le corps (110) du manchon est renforcé en face de la fente (140) longitudinale par rapport à d'autres parties, afin de supprimer une ovalisation du corps (110) du manchon, lorsque le corps (110) du manchon est, considéré à partir de la fente (140) longitudinale, comprimé latéralement.

12. Manchon de serrage suivant la revendication 11, dans lequel les autres parties ont des ouvertures (152), dont les dimensions sont choisies de manière à ce que la compression donne une déformation renforcée par rapport à la partie (150) renforcée, afin de supprimer l'ovalisation.

13. Manchon de serrage suivant la revendication 10 ou 11, dans lequel, par rapport aux autres parties, il est mis dans la partie (150) renforcée : davantage de matériau et/ou il n'est pas constitué d'ouverture (151) ou il est constitué des ouvertures (151) plus petites et/ou il est constitué des éléments de renfort.

14. Manchon de serrage suivant l'une des revendications précédentes, dans lequel le corps (110) du manchon et/ou la languette (120) formant ressort ont un matériau ayant un numéro de matériau 1.4310 ou 1.6908.

15. Procédé de fabrication d'un manchon de serrage, qui peut être introduit dans un trou (102) et qui convient pour la réception et l'immobilisation et le montage d'un capteur (105) dans le trou (102), le trou (102) définissant une direction radiale et une direction axiale, comprenant les stades suivants :
on se procure un acier laminé ayant une direction de laminage;
**caractérisé par** :
la formation d'au moins une languette (120) formant ressort ayant une extrémité (122) libre et une extrémité (124) de fixation, par estampage de l'acier laminé dans une direction d'estampage, la direction de laminage de l'acier laminé s'étendant entre l'extrémité (124) de fixation et l'extrémité (122) libre et
la formation d'un corps (110) de manchon de réception du capteur (105), l'extrémité (124) de fixation étant fixée au corps (110) du manchon et l'extrémité (122) libre pouvant osciller à l'encontre d'une force de ressort, de manière à ce que la languette (120) formant ressort appuie le capteur sur le trou (102), en appliquant la force de ressort, et le montre coulissant, lorsque le manchon de serrage se trouve ensemble avec le capteur au moins en partie dans le trou (102).
